# EUROPEAN PATENT SPECIFICATION

(11) **EP 3 657 931 B1**
(45) Date of publication and mention of the grant of the patent: **22.10.2025**
(21) Application number: 18839160.1
(22) Date of filing: 01.06.2018
(51) Int. Cl.: A01D 41/06, A01B 63/00, A01D 41/12, A01D 47/00, A01B 63/04

(54) **AGRICULTURAL HEADER WITH GROUND ENGAGING GAUGE MEMBER FOR ABOVE GROUND CUTTING**
LANDWIRTSCHAFTLICHES SCHNEIDWERK MIT BODENEINGRIFFSMESSELEMENT FÜR DAS SCHNEIDEN ÜBER DEM BODEN
COLLECTEUR AGRICOLE AVEC ÉLÉMENT DE JAUGE À MISE EN PRISE AVEC LE SOL POUR COUPE AU-DESSUS DU SOL

(30) Priority: 27.07.2017 CA 2974621
(43) Date of publication of application: 03.06.2020
(60) Divisional application: 24189799.0
(73) Proprietor: Macdon Industries Ltd., Winnipeg, Manitoba R3J 3S3 (CA)
(72) Inventor: TALBOT, Francois R., Winnipeg, Manitoba R2N 3M5 (CA); GRENIER, Eric Alain, Somerset, Manitoba R0G 2L0 (CA); HUNDT, Karl Bernard, Lake Mills, Wisconsin 53551 (US)
(74) Representative: Jostarndt Patentanwalts-AG
(86) International application number: PCT/CA2018/050656
(87) International publication number: WO 2019/018921

(56) References cited:
- EP-A1- 2 832 206
- EP-A2- 2 156 725
- WO-A1-2015/143550
- US-A- 5 562 167
- US-A1- 2010 028 183
- US-A1- 2010 281 837
- US-A1- 2016 018 346
- US-A1- 2016 183 461
- US-B2- 6 675 568

## Description

The present invention relates to an agricultural header for cutting a standing crop where the header includes ground engaging gauge members in the form of skids or wheels for supporting the cutter bar at a position spaced from the ground, and wherein the header also comprises first and second interconnecting linkages. In particular, the present invention relates to a crop harvesting header according to the features of independent claim 1.

### BACKGROUND

US 6,675,568 by Patterson et al discloses and US 8,245,489 by Talbot discloses a height control arrangement using gauge wheels supported at opposing ends of a rigid header. The gauge wheels serve to minimize any substantial deviations from a central controlled height of the header at the outboard ends of the header, however the system is only effective when used on a rigid header or a flexible header which is kept rigid. Published Application US 2016/0183461 published June 30, 2016 by Neudorf discloses a gauge wheel gauging system for attachment to a use with a crop harvesting header, wherein the harvesting header has a pair of wing frame portions connected to a center frame portion by a balancing linkage and which is operable in a first mode of operation by engagement of a skid plate of each wing frame potion along the ground. In one embodiment of the invention, the gauging system includes i) outer gauge wheels supporting the outer ends of the wing frame portions such that the skid plate is at a controlled distance from the ground and ii) inner gauge wheels proximate the center frame portion for supporting the inner ends of the wing frame portions such that the skid plate is at a controlled distance from the ground according to a second mode of operation of the header, wherein when cutting at ground level with the skid element engaged upon the ground, the outer gauge wheels are removed and the controller is switched so that the automatic header height control operates in the usual manner responsive to the distance signal. The removal of the outer gauge wheels by the operator is, however, unfavorable for the efficiency of the crop harvesting process. The disclosures of the above documents may be referenced for more detail.

### SUMMARY OF THE INVENTION

According to the invention there is provided a crop harvesting header comprising:
a main frame structure extending across a width of the header for movement in a forward direction generally at right angles to the width across ground including a crop to be harvested;
a mounting assembly for carrying the main frame structure on a propulsion vehicle;
a crop receiving table carried on the main frame structure across the width of the header;
a cutter bar across a front of the table arranged to move through the crop in a cutting action and carrying a sickle knife operable for cutting the crop as the header is moved forwardly for depositing the crop onto the table;
a crop transport system on the table for moving the cut crop toward a discharge location of the header;
a skid element on the main frame structure for engaging the ground so as to receive lifting forces from the ground;
the skid element located behind the cutter bar and extending along the length of the cutter bar so that the cutter bar is supported adjacent the ground for cutting crop close to the ground as the skid element slides over the ground;
the harvesting header being operable in a first mode of operation with the skid element engaging the ground and the cutter bar adjacent the ground and in a second mode of operation with the skid element and the cutter bar raised away from the ground;
and ground engaging gauge member having an engagement surface arrangement to engage the ground at a position rearwardly of the cutter bar and in the second mode of operation maintaining the cutter bar supported away from the ground;
the ground engaging member being carried on a mounting assembly comprising an elongate support member connected at a forward end adjacent to and rearwardly of the cutter bar for pivotal movement about an axis parallel to the cutter bar and extending rearwardly therefrom;
the elongate support member being arranged to be raised and lowered to raise and lower the surface;
wherein the engagement surface arrangement comprises:
   a skid surface carried on the elongate support member which extends effectively as a continuous slide surface which slides over the ground extending from a front edge at a position adjacent the cutter bar to a rear surface;
   and at least one ground engaging wheel arrangement carried on the elongate support member. Such harvesting header comprises the features of independent claim 1.

In particular, there is provided a crop harvesting header comprising:
a main frame structure extending across a width of the header;
a mounting assembly for carrying the main frame structure on a propulsion vehicle by which the header is transported in movement in a forward direction generally at right angles to the width across ground including a crop to be harvested;
a crop receiving table carried on the main frame structure across the width of the header;
a cutter bar across a front of the table arranged to move over the ground in a cutting action and carrying a sickle knife operable for cutting the crop as the header is moved forwardly across the ground for depositing the crop onto the table;
a skid element on the main frame structure for engaging the ground so as to receive lifting forces from the ground;
the skid element located behind the cutter bar and extending along the length of the cutter bar so that the cutter bar is supported adjacent the ground for cutting crop close to the ground as the skid element slides over the ground;
a crop transport system on the table for moving the cut crop toward a discharge location of the header;
the harvesting header being operable in a first mode of operation with the skid element engaging the ground and the cutter bar adjacent the ground and in a second mode of operation with the skid element and the cutter bar raised away from the ground;
the main frame structure including a center frame portion, a first wing frame portion and a second wing frame portion;
the first wing frame portion being connected to the center frame portion by a first pivot coupling which provides pivotal movement of the first wing frame portion relative to the center frame portion about a first pivot axis extending in a plane parallel to the forward direction;
the first pivot coupling acting to support weight from the first wing frame portion while outboard weight from the first wing frame portion outboard of the first pivot coupling rotates the first wing frame portion about the first pivot coupling in a downward direction;
the second wing frame portion being connected to the center frame portion by a second pivot coupling which provides pivotal movement of the second wing frame portion relative to the center frame portion about a second pivot axis extending in a plane parallel to the forward direction;
the second pivot coupling acting to support weight from the second wing frame portion while outboard weight from the second wing frame portion outboard of the second pivot coupling rotates the second wing frame portion about the second pivot coupling in a downward direction;
the mounting assembly including a float suspension system connected to the center frame portion providing a variable lifting force from the propulsion vehicle acting to support the main frame structure for floating movement relative to the propulsion vehicle;
a first interconnecting float linkage connected between the center frame portion and the first wing frame portion which communicates a first variable lifting force from the center frame portion to the first wing frame portion against the outboard weight of the first wing frame portion;
a second interconnecting linkage connected between the center frame portion and the second wing frame portion which communicates a second variable lifting force from the center frame portion to the second wing frame portion against the outboard weight of the second wing frame portion;
in the first mode of operation with the skid element engaging the ground, the float suspension system and first and second interconnecting linkages provide a downforce from the skid element on the ground which is balanced between the center frame portion and the first and second wing frame portions;
and a gauging system used in the second mode of operation comprising:
   a first ground engaging member supported on the first wing frame portion at a location spaced outwardly from the center frame portion for engaging the ground so as to receive lifting forces from the ground;
   a second ground engaging member supported on the second wing frame portion at a location spaced outwardly from the center frame portion for engaging the ground so as to receive lifting forces from the ground; and
   additional ground engaging members supported on the main frame structure proximate the center frame portion for engaging the ground so as to receive lifting forces from the ground;
each of the ground engaging members having a surface arrangement engaging the ground at a position rearwardly of the cutter bar and forwardly of the rear of the table in the second in the second position of the header with the first, second and additional ground engaging members collectively supporting the skid element spaced above the ground while the first and second wing frame portions pivot relative to the center frame portion in response to changes in ground height;
wherein each of the surface arrangements is mounted on an elongate support member connected at a forward end at rearwardly of the cutter bar and forwardly of the rear of the table for pivotal movement about an axis parallel to the cutter bar and extending rearwardly therefrom;
the elongate support member being arranged to be raised and lowered to raise and lower the surface arrangement;
wherein each of the surface arrangements is fully retractable by raising of the elongate support member to a height underneath the table to cause the skid element to engage the ground.

According to the invention there is provided a crop harvesting header
wherein the mounting assembly includes a float suspension system connected to the center frame portion providing a variable lifting force from the propulsion vehicle acting to support the main frame structure for floating movement relative to the propulsion vehicle;
and a gauging system used in the second position comprising a first, second, third and fourth ground engaging member each supported on the main frame structure for engaging the ground so as to receive lifting forces from the ground with the first and fourth ground engaging members arranged at or adjacent outer ends of the main frame structure and with the second and third ground engaging members arranged at spaced positions inboard of the outer ends;
each of the ground engaging members having a surface arrangement engaging the ground at a position rearwardly of the cutter bar and forwardly of the rear of the table such that, in the second mode of operation, the ground engaging members collectively support the skid element spaced above the ground;
wherein each of the ground engaging members is mounted on an elongate support member connected at a forward end at or adjacent the cutter bar for pivotal movement about an axis parallel to the cutter bar and extending rearwardly therefrom;
the elongate support member being arranged to be raised and lowered to raise and lower the surface;
wherein each of the elongate support members extends rearwardly under the table to a rear end rearward of the table and there is provided an upstanding extendible member connected at a lower end to the elongate support member and to the frame structure above the lower end and rearward of the table to raise and lower the cutter bar relative to the ground.

According to an aspect of the invention there is provided a crop harvesting header
wherein the mounting assembly includes a float suspension system connected to the center frame portion providing a variable lifting force from the propulsion vehicle acting to support the main frame structure for floating movement relative to the propulsion vehicle;
and a gauging system used in the second position comprising a first, second, third and fourth ground engaging member each supported on the main frame structure for engaging the ground so as to receive lifting forces from the ground with the first and fourth ground engaging members arranged at or adjacent outer ends of the main frame structure and with the second and third ground engaging members arranged at spaced positions inboard of the outer ends;
each of the ground engaging members having a surface arrangement engaging the ground at a position rearwardly of the cutter bar such that, in the second mode of operation, the ground engaging members collectively support the skid element spaced above the ground;
wherein each of the ground engaging members is mounted on an elongate support member connected at a forward end rearwardly of the cutter bar and forwardly of the rear of the table for pivotal movement about an axis parallel to the cutter bar and extending rearwardly therefrom;
the elongate support member being arranged to be raised and lowered to raise and lower the surface arrangement;
wherein the surface arrangement includes at least a positon in contact with the ground which is forward of the rear of the table;
and wherein the mounting assembly includes a tilt cylinder connected to the frame structure of the header for tiling the frame structure and the cutter bar carried thereby forwardly and rearwardly;
and wherein common operation of the lowering of the elongate support members and the tilt cylinder causes the cutter bar to be raised such that the cutter bar is located at a cutting height from the ground of greater than 30.5 cm (12 inches).

In another aspect there is provided a resilient suspension arrangement which provides movement between the ground engaging member, either whether this is a wheel or a skid, and the mounting to the frame of the header. In one embodiment this is provided at the rear of the elongate support member so as to allow the support member to pivot upwardly and downwardly in a resilient suspension movement relative to its pivot at the forward end. Preferably this is provided as a pivotal link at the connection of the member to the adjustment post at the rear of the frame. Alternatively in another embodiment the suspension can be provided between the elongate support member and the wheel arrangement allowing up and down floating movement of the wheel relative to the elongate member. This may counteract tendency for the wheels to dance over the surface causing undesirable motion of the cutter bar.

Preferably the ground engaging wheel arrangement comprises a pair of wheels each on a respective side of the skid with transverse axis of rotation across the top of the skid allowing the wheels to rise relative to the skid.

The arrangements defined above according to the invention are configured for being used in a header construction wherein:
the main frame structure includes a center frame portion, a first wing frame portion and a second wing frame portion;
the first wing frame portion is connected to the center frame portion by a first pivot coupling which provides pivotal movement of the first wing frame portion relative to the center frame portion about a first pivot axis extending in a plane parallel to the forward direction;
the first pivot coupling acts to support weight from the first wing frame portion while outboard weight from the first wing frame portion outboard of the first pivot coupling rotates the first wing frame portion about the first pivot coupling in a downward direction;
the second wing frame portion is connected to the center frame portion by a second pivot coupling which provides pivotal movement of the second wing frame portion relative to the center frame portion about a second pivot axis extending in a plane parallel to the forward direction;
the second pivot coupling acts to support weight from the second wing frame portion while outboard weight from the second wing frame portion outboard of the second pivot coupling rotates the second wing frame portion about the second pivot coupling in a downward direction;
the mounting assembly includes a float suspension system connected to the center frame portion providing a variable lifting force from the propulsion vehicle acting to support the main frame structure for floating movement relative to the propulsion vehicle;
a first interconnecting float linkage is connected between the center frame portion and the first wing frame portion which communicates a first variable lifting force from the center frame portion to the first wing frame portion against the outboard weight of the first wing frame portion;
a second interconnecting linkage is connected between the center frame portion and the second wing frame portion which communicates a second variable lifting force from the center frame portion to the second wing frame portion against the outboard weight of the second wing frame portion;
in the first position with the skid element engaging the ground, the float suspension system and first and second interconnecting linkages provide a downforce from the skid element on the ground which is balanced between the center frame portion and the first and second wing frame portions.

It is more preferable that the cutting height in the second mode is greater than 35.6 cm (14 inches).

Preferably in this arrangement the first and second ground engaging members are mounted at respective outer ends of the first and second wing frame portions additional ground engaging members are mounted on the first wing frame portion closely adjacent to the pivot axis and closely adjacent the pivot axis, and the center frame portion is supported only by said float suspension system and not by any additional ground engaging members.

Preferably each of the elongate support members extends rearwardly under the table to a rear end rearward of the table and there is provided an upstanding extendible member connected at a lower end to the elongate support member and to the frame structure above the lower end and rearward of the table to raise and lower the cutter bar relative to the ground.

Preferably the extendible member comprises a pair of telescopic members with an outer with an inner member slidable within an outer member, wherein the inner member has a plurality of longitudinally spaced holes for receiving a pin of the outer member to locate the inner and outer members at an extension position defined by the selected hole, wherein the holes are spaced transversely of the inner member and the pin is carried on a rotatable member which acts when rotated to move the pin transversely across the outer member so that the transverse position of the pin when rotated acts automatically to select one of the holes of the inner member.

Preferably the main frame structure includes a frame beam and a plurality of frame members located at spaced positions across the main frame structure;
each frame member extending from the frame beam in a first portion downwardly behind the table and in a second portion forwardly under the table to support the cutter bar;
the second portion forming a channel member with a downwardly facing open face;
the elongate support members each being located in a second portion of a respective one of said frame members and extending rearwardly under the table.

Preferably each of the ground engaging surface arrangements is located under the table.

Thus one key feature is that the system mounts a skid or skid and wheel on a long arm which is attached to an upstanding actuator at the rear of the frame. Another key feature relates to the location and arrangement of the skid and wheel in relation to the fact that it is pivoted at the front on a lug at the frame and is carried on a beam which is attached to an upstanding adjustable leg (cylinder or telescope) at the back of the frame.

Another key feature relates to the location and arrangement of the skid and/or wheel so that the wheel can be fully retracted to allow the header to operate in the first mode with the cutter bar and skid element on the ground..

Another key feature relates to the long skid which extends from the pivot just behind the cutter bar right back to the rear of the table or at the upstanding adjustment post.

One system uses four wheel assemblies (one at each end of the header and one adjacent to or more particularly just outside or just inside of the two hinge locations near the center of the header. The wheel assemblies pivot near the cutter bar and have a short skid that is part of the structure that the header rides on when cutting directly on or close to the ground. The adjustment of all four wheel assemblies is done at the rear of the header.

The long skid, like the wheel assembly, is located at each end of the header and also near each hinge point for a total of four skids. These skids also pivot at the cutter bar with an adjustment mechanism at the rear of the header.

For the height adjustment of the wheel/skids, this can be effected by a mechanical adjustment using a telescoping tube with a series of holes and a pin that can be used to position the wheels or skids to a predetermined height. A second option is the use of hydraulic cylinders that replace the mechanical adjuster and a switch in the combine cab that allows the operator to adjust the wheel height using the combine's hydraulics.

For both the wheels and the skids using either the mechanical or hydraulic adjuster, a maximum cut height of approximately 35.6 to 45.7 cm (14 to 18 inches) can be achieved. In addition, with the wheels or skids being fully retracted while remaining in place on the header, the operator can cut with the cutter bar/skid element touching the ground without ever needing to remove the wheels/skids from the header.

The three section frame is designed to cut on the ground and such that the cutter bar pressure is consistent or balanced across the full length of the cutter bar by means of a balance linkage that uses the weight of the header to balance the weight of the wings. This works very well for crops like soybeans, peas, lentils, where it is desirable to cut as close to the ground as possible. In these crops, the cutter bar is skidded along the ground and the flex balance linkage and header float system allow the header to follow contours with minimal pressure between the cutter bar and the ground. Current standard skid shoes provide some cutter bar height adjustment in the order of up to 12.7 cm (5 inches).

In crops like cereals it is sometimes desirable to cut at a height of up to 35.6 to 47.7 cm (14 to 18 inches) while following the ground contour. Furthermore, it is desirable to easily go from cutting at this height, and back to cutting on the ground with minimal effort. It is thus desirable for the device that allows for cutting off the ground to stay on the header when cutting on the ground, and for the adjustment to be quick and easy.

The device includes contour wheels or long skid shoes. It consists of four separate assemblies located such that the skid shoe or wheel assembly make contact with the ground and cause the header to flex and follow the contour of the ground, much like the header does when cutting on the ground. The locations of the wheels or long skid shoes is such that they provide enough of a moment about the virtual balance points of the flex header to overcome friction and cause the header to flex. This virtual balance point is located on the header wing, approximately one third the distance from the hinge point to the end of the header.

There are a total of four wheel assemblies across the width of the header. Two are at each end of the header, and two are near the hinge points. These locations ensures enough moment about the virtual balance point of the header to overcome friction and cause the header to flex. This allows the operator to use the header while in flex mode in order to achieve better ground following while cutting as high as 18 inches off the ground. Ground following was previously only possible while cutting with the cutter bar resting on the ground or else on the short skid shoes for a maximum height of 12.7 cm (5 inches).

The means of adjusting the height of the wheel assembly can be a manual adjuster or a hydraulic wheel height adjustment system. With the manual adjuster, the operator sets all four adjusters to a height which is close to the desired cut height and fine adjustments can then be made to the cut height by changing the tilt of the header using the tilt cylinder that attaches the header to the adapter. With the hydraulic adjustment which contains four hydraulic cylinders in a series circuit in a master slave arrangement, and a switch in the combine cab, the operator can adjust the height of the wheels by actuating the cylinders using the in cab switch while harvesting and can adjust the tilt to obtain an increase in the height using the same switch.

One embodiment of the manual adjuster includes two telescoping tubes with a pin adjustment system to lock the position. In one embodiment, the outer tube utilizes a series of holes in a circular pattern with each of the holes aligning with one of the holes on the inner tube. This arrangement allows the user to select the height of the adjuster by pulling the pin and rotating the pin holder to the desired setting after which the inner tube can either be extended or retracted until the pin engages in the hole on the inner tube.

Where the ground engaging member comprises a long skid shoe, this comprises a skid member positioned such that the header rides on the shoes when in cutting position. The operator may choose to retract the shoes such that the header can cut on the ground, effectively removing the long skid shoes from operation. This enables the operator to adjust cut height such that a desired stubble length can be achieved. The embodiment shown allows for a stubble height ranging from 3.2 cm (1.25 inch) up to 35.6 cm (14 inches). This allows a flexible header to maintain a consistent cutter bar to ground spacing. The skid may use metal, poly, or other desirable material as the ground contacting surface. This surface may be either permanent or replaceable. The means of adjusting the cut height is the same as described above with the contour wheels by means of a manual or automatic method, either using hydraulic or electric components. The long shoe may either be integrated into standard short skid shoes near the front of the header, or exist in addition to short standard skid shoes.

Various embodiments of the invention will now be described in conjunction with the accompanying drawings in which:

### BRIEF DESCRIPTION OF THE DRAWINGS

Figure 1 is a rear elevational view of a multi-section header including ground support members according to the present invention.
Figure 2 is a top plan view of the prior art multi-section header according to Figure 1 .
Figure 3 is an end elevational view of the multi-section header according to Figure 1 .
Figure 4 is a isometric view of one gauge wheel assembly for use in the harvesting header of Figures 1 to 5 according to the invention.
Figure 5 is a side elevational view of the gauge wheel assembly of Figure 4 located on a cross-sectional view of the header of Figures 1 to 3 showing the gauge wheel in the retracted position with the cutter bar in the ground position of the first mode.
Figure 6 is a side elevational view of the gauge wheel assembly of Figure 6 located on a cross-sectional view of the header of Figures 1 to 3 showing the gauge wheel in the extended position with the cutter bar in the maximum raised position of the second mode.
Figure 7 is an enlarged view of the wheels and suspension of the embodiment of Figures 4 to 6.
Figure 8 is an enlarged view of the extendible post of the embodiment of Figures 4 to 6.
Figure 9 is a further enlarged view of the extendible post of the embodiment of Figures 4 to 6.
Figure 10 is a isometric view of a second embodiment of one gauge wheel assembly for use in the harvesting header of Figures 1 to 3 according to the invention where the resilient suspension arrangement is located at the rear.
Figure 11 is a cross-sectional view along the lines 11-11 of the embodiment of Figure 10.
Figure 12 is a cross-sectional view along the lines 12-12 of the embodiment of Figure 10.

In the drawings like characters of reference indicate corresponding parts in the different figures.

### DETAILED DESCRIPTION

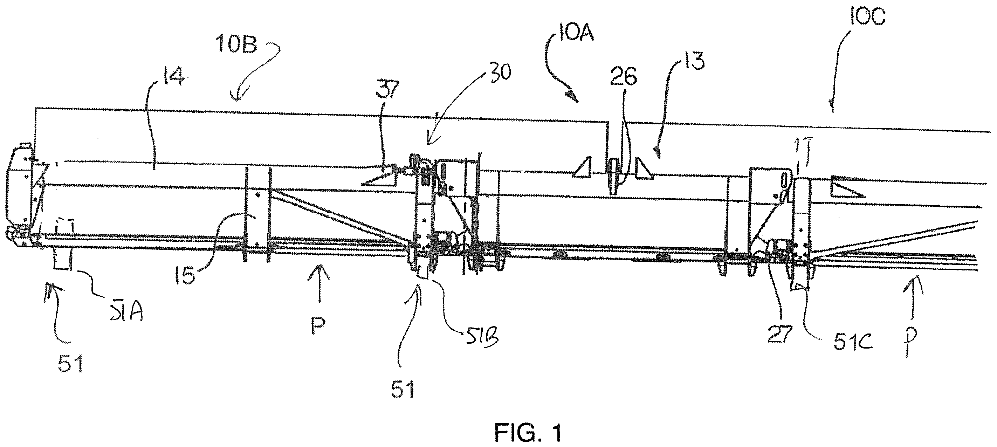

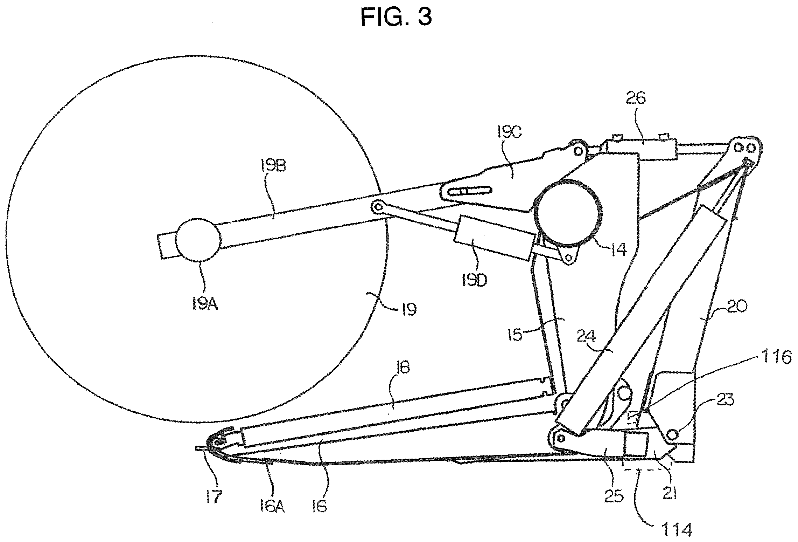

Referring to the accompanying figures, there is illustrated a gauge system generally indicated by reference numeral 50. The gauge system is particularly suited for use with an agricultural header 10 manufactured by MacDon Industries Ltd. under the model number FD70/FD75/FD1/FD2. US patent 6,675,568 by Patterson et al, the disclosure of which may be referenced for more detail discloses the general operation of the header. For convenience, Figures 1 through 3 from US 6,675,568 are attached herewith and some of the description with regard to operation of the header from US 6,675,568 is reproduced in the following.

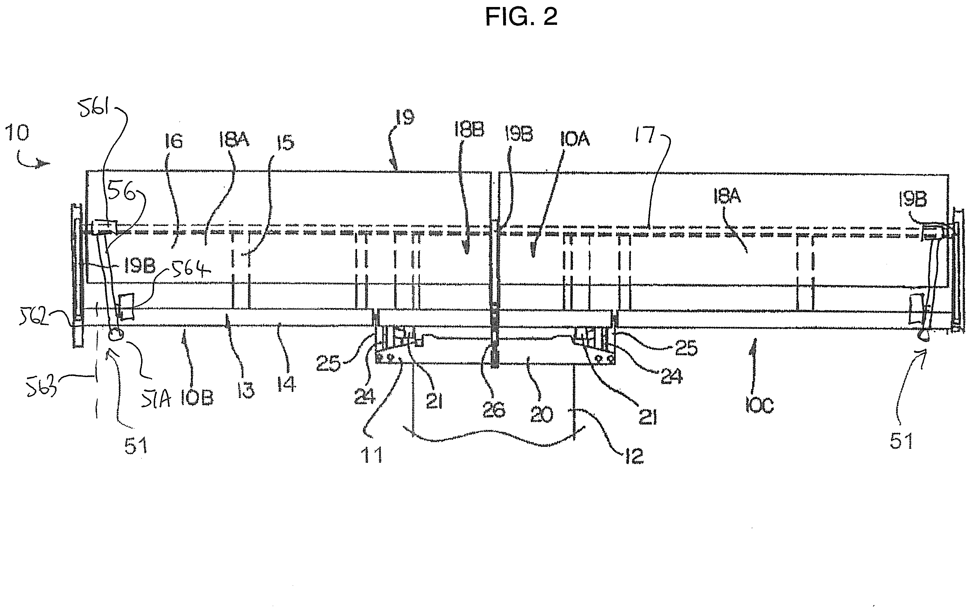

Figures 1 and 2 show in rear elevational view and in plan view respectively the header 10 carried on an adapter 1 1 attached to the feeder house 12 of a combine harvester. In Figure 1 the adapter is omitted for convenience of illustration.

The header 10 includes a frame 13 defined by a main rear beam 14 and a plurality of forwardly extending arms 15 which extend downwardly from the beam 14 and then forwardly underneath a table 16 which extends across the header. At the forward end of the table 16 is provided a cutter bar 17. On top of the table 16 is provided a draper transport system 18 which carries the crop from the cutter bar across the header to a discharge location at the feeder house 12. The draper thus include two side drapers extending from respective ends of the header inwardly toward the feeder house and a center adapter section 18B which acts to feed the crop from the side drapers 18A rearwardly to the feeder housing.

The header further includes a reel 19 including a beam on which is mounted a plurality of reel bats (not shown) which are carried on the beam for rotation with the beam around the axis of the beam. The beam is carried on reel support arms 19B which extend from the beam rearwardly and upwardly to a support bracket attached to the transverse main beam 14. The reel arms can be raised and lowered by hydraulic cylinders connected between the respective arm and the beam 14.

The adapter 11 provides a center support for the header at a center frame portion 10A and comprises a frame 20 which attaches to the feeder house 12 and carries at its lower end a pair of forwardly extending pivotal arms 21 which extend forwardly underneath respective ones of the frame members 15 of the header. The pivotal arms 21 can pivot upwardly and downwardly about a respective pivot pins 23 each independently of the other arm. Each arm is supported by a respective spring 24 carried on a respective stub arm 25 attached to the respective arm 21 . Thus the spring 24 provides tension on the stub arm 25 pulling it upwardly around the pin 23 which acts to pull up the respective arm 21 and provide a lifting force underneath the header at a lifting point partway along the respective frame member 15 and underneath the draper 18 and the table 16.

At the center of the adapter is provided a link 26 which extends from the frame 20 forwardly to the central bracket 19C of the beam arm support brackets. The link 26 is provided in the form of a hydraulic tilt cylinder which allows adjustment of the length of the cylinder thus pivoting the header forwardly and rearwardly about the support point of the arms 21 on the underside of the header. Thus the attitude of the header, that is the angle of the table 16 to the horizontal can be tilted by operation of the cylinder forming the link 26.

In addition the attitude of the header about an axis extending forwardly of the direction of movement that is at right angles to the transverse beam 14 is effected by the independent pivotal movement of the arms 21 provided by the springs 24 which act as a floatation system. In addition the whole header can float upwardly and downwardly on the springs 24 with the link 26 pivoting to accommodate the upward and downward movement and the arms 21 pivoting about the respective pin 23.

The table 16 provides behind the cutter bar 17 a skid plate 16A typically including a polymeric wear shield which is arranged to engage the ground. Thus upward force is provided from the ground which tends to lift the header taking weight off the support springs 24. In practice the springs are adjusted so that the springs act to support the majority of the weight of the header leaving a relatively small proportion of the weight to rest on the ground. Thus the header can float upwardly and downwardly as the ground provides areas of different height with one end of the header being movable upwardly independently of the other end by independent flexing of the springs 24. Thus the header tends to follow the ground level.

The header is formed in a number of sections which are independently pivotal each relative to the next and in which adjustment of the lifting force provided by the springs 24 is transferred to each of the sections proportionally so that each section can float upwardly and downwardly and each section applies a force to the ground which is proportional to the total force of the whole header.

Thus the beam 14 is divided into a number of separate pieces depending upon the number of sections of the header. In the embodiment shown there are three sections including a center frame portion or section 10A carried on the propulsion vehicle by the adapter or center support 11 , a first wing frame portion or section 10B and a second wing frame portion or section 10C. The center section 10A is mounted at the adapter so that the arms 21 extend into engagement with the center section. The wing sections are pivotally connected to the center section such that each can pivot upwardly and downwardly about a respective pivot axis generally parallel to the direction of movement.

Thus the beam 14 is split into three portions each co-operating with a respective one of the sections 10A, 10B and 10C and defining a main beam therefor. Each section of the beam 14 includes respective ones of the frame members 15 which support the respective portion of the table. Thus as best shown in Figure 1 , there is a break between the beam sections 4 of the center section 10A and one wing section 10B. The end most frame member 15A of the wing section 10B is arranged at the break. The end frame member 15B of the center section 10A is spaced inwardly from the break leaving space for a pivot coupling 27 extending from the frame member 15A to the frame member 15B and defining a pivot pin 27A lying on the pivot axis between the wing section 10B and the center section10A. In a rear elevational view, the cutter bar 17 is also visible underneath the header at the forward end of the frame members 15 and at the front of the table 16.

In the embodiment shown the cutter bar 17 is split at a junction lying along the axis of a hinge pin so as to provide a pivot within the cutter bar allowing the cutter bar to bend at the junction.

Thus the two sections 10A and 10B are supported each relative to the other for pivotal movement of the wing section 10B about an axis extending through the hinge pin and through the break in the cutter bar 17 so that the wing section is supported at its inner end on the center section but can pivot downwardly at its outer end so that the weight at the outboard end is unsupported by the center section and causes downward or counter clockwise pivotal movement of the wing section 10B.

The wing section 10C is mounted in an identical or symmetrical manner for pivotal movement about the other end of the center section 10A. The amount of pivotal movement allowed of the wing section relative to the center section about the axis of the pivot pin is maintained at a small angle generally less than 6° and preferably less than 4° as controlled by suitable mechanical stop members which are provided at a suitable location with the required mechanical strength to support the wing frame section against upward or downward movement beyond the stop members. Suitable stop members can be designed by a person skilled in the art and the details of the stop members are not described herein.

The outboard weight of the wing section 10B is supported on an interconnecting linkage 30 which communicates that weight from the inner end of the beam 14 of the section 10B through to the support for the center section 10A at the springs 24.

In general the linkage operates to transfer the outboard weight of the wing section inwardly to the center section and at the same time to balance the lifting force provided by the springs 24 so that it is proportionally applied to the center section and to the wing section.

Thus in general the header is attached to the combine feeder house using the float system described previously that supports the header so that it can be moved up when a vertical force about 1% to 15% of its weight is applied to the cutter bar from the ground. The reaction of the float linkage that typically supports 85% to 99% of the header weight on the header is used to balance the weight of the wings.

The system is designed so that if the operator sets the float so that the float system supports 99% of the header weight then the remaining 1% will be evenly distributed across the cutter bar. If the operator changes the float so that 85% is supported by the combine harvester then the remaining 15% would also be evenly distributed across the cutter bar without the operator making adjustments. Thus, not only is the total lifting force to each sections varied in proportion to the total lifting force but also that lifting force on each section is balanced across the width of section. As the sections are rigid between the ends, this requires that the lifting forces be balance between the ends to ensure the even distribution across the cutter bar of each section and thus of all the sections. This provides an arrangement in which the force required to lift the header is the same force at any location along the length of the cutter bar, whether that location is at the center section, at a junction between the center section and the wing section or at the wing section. This is achieved in this embodiment by the balancing system which transfers lifting force between the sections with the forces being balanced by a balance beam of the linkages 30.

The header frame sections and the reel sections are hinged and supported so that the reel will stay in approximately the same position relative to the cutter bar. Thus the balance beam as described in more detail hereinafter balances the lifting force applied to the ends of the center section relative to the lifting force which is applied to the outboard weight of the wing section so that the lifting force is even across the width of the header. Thus if a lifting force is applied by the ground or any other lifting mechanism for example merely manually lifting the header at a particular location across its width, that would cause the header to rise at that point and to fall at other points. The amount of force necessary to lift the header at that point will be the same as it is at other points and this lifting force can be varied for the total header and proportioned across the width of the header automatically by the balance beams as described hereinafter.

It will be appreciated that the inboard weight of the wing section is transferred through the pivot 27 to the outboard end of the center section and that weight is transferred directly to the balance beam. Also the outboard weight of the wing section is transferred through the linkages 30. Yet further a lifting force from the arm 21 is applied to the balance beam.

The whole support assembly including the linkages 30, the lift arm 21 and the springs 24 are arranged to provide a floating movement for each of the first and second frame portions that is the center and wing frame portions relative to each other and relative to the propulsion vehicle such that upward pressure from the ground on the skid element 16A which is greater in a downward force for a part of the weight of the header and supported by the lifting force tends to lift each of the center and wing frame portions relative to the propulsion vehicle.

The height of the header is primarily controlled by controlling the height of the feeder house 20 of the combine harvester relative to the ground using a height control mechanism. Typically the feeder house is pivotally supported on a main frame of the combine harvester and an actuator member is mounted between the feeder house and the main frame to raise and lower the feeder house.

The height of the main structure of the header is in turn supported for up and down movement relative to the adapter 11 by supporting the main frame structure on the pivot arms 21 which are supported for floating movement by the springs 24 by providing a total spring lifting force to the header. The linkages 30 in turn distribute this total spring force into a center lifting force F_{c} which provides lift to the center frame section and the inboard ends of the wing frame sections pivotally coupled thereto as well as a first lifting force and a second lifting force acting upon the first and second wing frame sections respectively in a direction intending to cause the outboard ends of the wing frames to be raised upwardly.

The balance linkages 30 serve to balance the total lifting force provided by the combine harvester through the pivot arms 21 to the center lifting force at the forward ends of the balance beams 102 and the first and second lifting forces at the rear ends of the balance beams so as to vary the lifting forces as the total lifting force varies and so as to balance the lifting forces from the ground applied along the length of the skid element.

The gauge system for use with a crop harvesting header according to the present invention is particularly suited for use with the above described header 10 to permit the header to operate in a balanced manner with the wing sections floating relative to the center section when operating at a raised cutting height with the cutter bar and skid member 16A supported well above the ground.

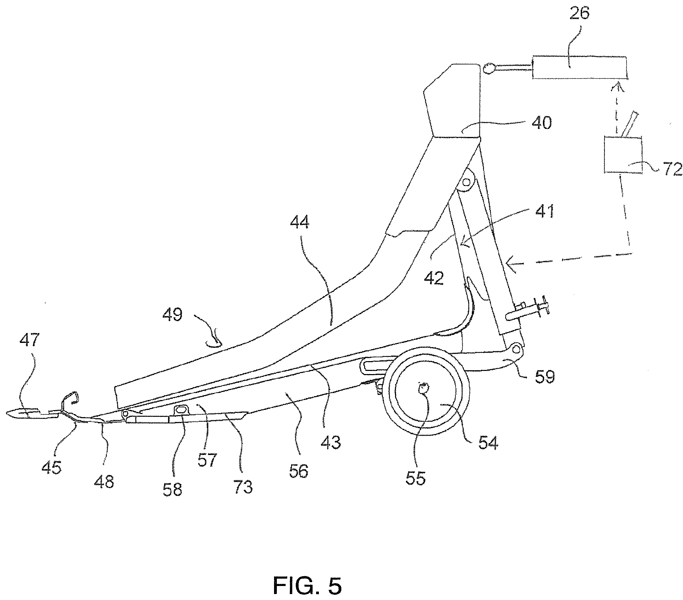

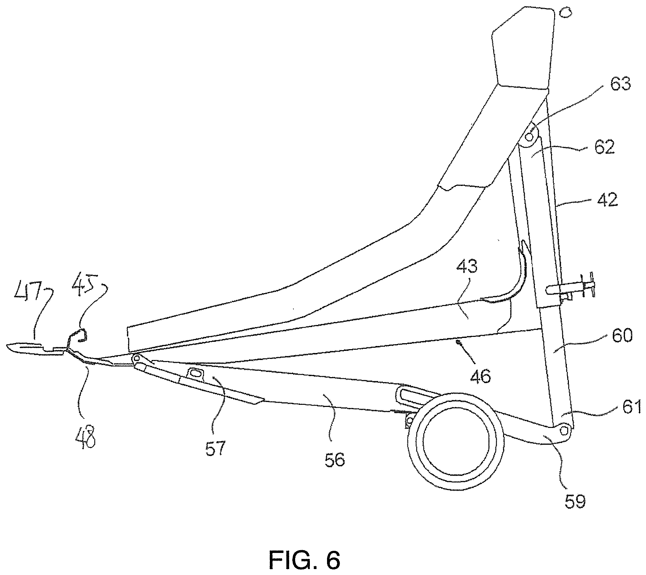

Thus as shown in Figures 1 to 3 there is provided a crop harvesting header 10 with center and wing sections 10A, 10B and 10C. Each includes a main frame structure so that together the combined frame structure extends across a width of the header. The main frame structure as best shown in Figures 5 and 6 includes a main frame beam 40 across the rear at the top of the header and a plurality of frame members 41 located at spaced positions across the main frame structure. Each frame member 41 extends from the frame beam 40 in a first portion 42 downwardly behind the table 44 and in a second portion 43 forwardly under the table to support the cutter bar 45. The second portion 43 forms a channel member with a downwardly facing open face 46.

The frame structure is attached to a mounting assembly defined by the adapter 1 1 for carrying the main frame structure on the feeder house 12 of a propulsion vehicle such as a combine harvester by which the header is transported in movement in a forward direction generally at right angles to the width across ground including a crop to be harvested.

The crop cut by the sickle knife 47 of the cutter 45 falls onto the crop receiving table 44 carried on the main frame structure across the width of the header.

In accordance with the arrangement described herein, there is provided a gauging system used in the second mode of operation to hold the cutter bar in the raised position of Figure 6.

This includes four separate ground engaging members 51 located in the positions shown in Figure 1. This includes a first ground engaging member 51A supported on the first wing frame portion 10B at a location spaced outwardly from the center frame portion and particularly at the outer end of the portion at the crop divider and end sheet of the header for engaging the ground so as to receive lifting forces from the ground, a second ground engaging member 51B supported on the second wing frame portion 10C also at the outer end and two additional ground engaging member 51C supported on the wing frame portions immediately proximate the center frame portion 10A for engaging the ground so as to receive lifting forces from the ground. The two additional members 51 can be located on the center section. The outer members are preferably located at the ends but also can be moved inboard.

The location of the four ground engaging elements 51 at the locations specified provides a proper balance of the header relative to the nominal balance points P on the wing frame portions 10B and 10C. The points P represent the locations where the three sections will be balanced if supported by members at the points. It will be noted that the actual ground engaging members are located at spaced positions from these points. Thus the outermost member 51 is located at the outer end of the wing and the innermost member 51 is located closely adjacent the pivot coupling. These locations are spaced sufficiently from the points P so that ground forces transmitted to the frame through the members 51 will allow the wings to flex around the pivot points and keep all three sections at a common spacing from the ground.

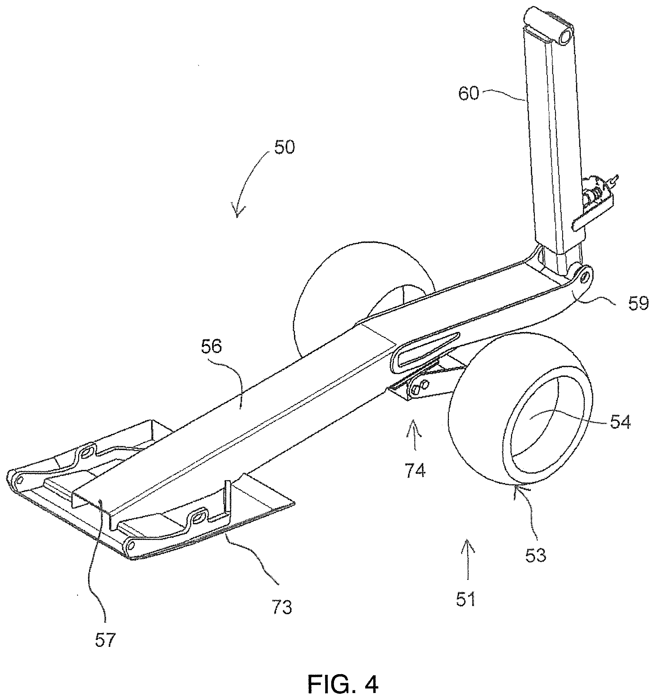

In the embodiment of Figures 4 to 7, each of the ground engaging members 51 has a surface arrangement defined by the periphery 53 of a pair of wheels 54 carried on an axle 55. The surface 53 engages the ground at a position rearwardly of the cutter bar and underneath the table such that, in the second mode of operation, the ground engaging members collectively support the skid element 16A spaced above the ground while the first and second wing frame portions are allowed to pivot relative to the center frame portion in response to changes in ground height.

The wheels 54 defining each of the surface arrangements are mounted by the axle 55 on an elongate support member 56 connected at a forward end 57 adjacent to and rearwardly of the cutter bar 47 for pivotal movement about an axis 58 parallel to the cutter bar 47. The elongate support member 56 forms a rigid beam arranged to be raised and lowered to raise and lower the wheels 54 and the surface arrangement 53 defined thereby;

As shown in Figure 5, each of the wheels is fully retractable, by raising of the elongate support member or beam 56 to an uppermost raised position within the channel 43, to a height of the wheel underneath the table to cause the skid element 48 or cutter bar polymer shield to engage and run across the ground in the first mode of operation cutting at ground level. In this mode the header will ride either on the cutter bar shield or on the skid shoe depending on the header angle.

Thus the first and second ground engaging members are mounted at respective outer ends of the first and second wing frame portions and the two inner additional ground engaging members 51B. 51C are mounted on the first wing frame portion closely adjacent to the pivot axis and on the second wing frame portion closely adjacent the pivot axis. In the second mode of operation and in this arrangement where the ground engaging members are mounted only on the wing sections, the center frame portion is supported only by said float suspension system and not by any additional ground engaging members 51 .

Each of the elongate support beams 56 extends rearwardly under the table to a rear end 59 rearward of the table. At the rear end there is provided an upstanding telescopically extendible member 60 connected at a lower end 61 to the elongate support beam 56 and to a lug 63 of the frame structure at the upper end 62 rearward of the table to raise and lower the beam relative to the frame and thus the cutter bar relative to the ground.

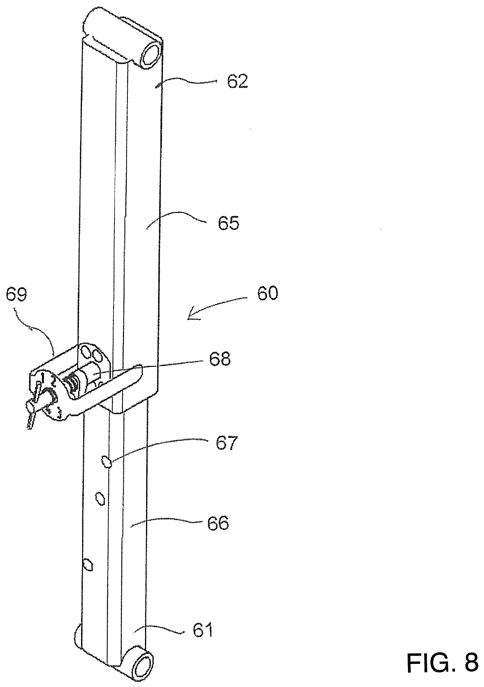

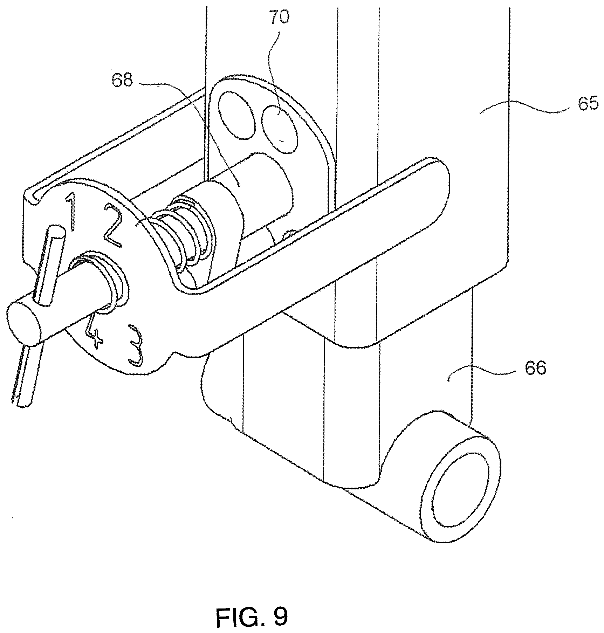

As best shown in Figures 8 and 9 the extendible member comprises a pair of telescopic members 65 and 66 including an outer member 65 with an inner member 66 slidable within the outer member. The inner member 66 has a plurality of longitudinally spaced holes 67 for receiving a pin 68 of the outer member to locate the inner and outer members at an extension position defined by the selected hole. The holes 67 are spaced also transversely across the inner member and the pin is carried on a rotatable member 69 which acts when rotated to move the pin 68 transversely across the outer member into a selected one of a plurality of holes 70 so that the transverse position of the pin is adjusted as the member 69 is rotated and when rotated acts automatically to select one of the holes of the inner member, thus determining the telescopic length of the member 60. The elongate support members are each located in a second channel portion 46 of a respective one of said frame members 41 and extends rearwardly under the table to the rear member 60 for adjustment.

Each of the ground engaging surfaces 53 is located under the table so that it is forward of the rear of the table. Thus when raised, the amount of movement allowed is relatively small. In order to achieve the required height of the cutter bar of at least 30.5 cm (12 inches) and preferably greater than 35.6 cm (14 inches), the mounting assembly includes the tilt cylinder 26 connected to the frame structure of the header for tiling the frame structure and the cutter bar carried thereby forwardly and rearwardly. Thus when actuated by a switch 72 the tilt cylinder can be retracted to pull the front of the header upwardly to further increase the height of the cutter bar, although the arrangement described herein provides a required height of the cutter bar even without the tiling action of the cylinder 26.

In a case where the manual adjustment of the member 60 is replaced by a hydraulic cylinder, common operation of the lowering of the elongate support members 60 and the tilt cylinder causes the cutter bar to be raised such that the cutter bar is located at a cutting height from the ground of greater than 30.5 cm (12 inches).

As shown in Figures 4, 5 and 6, the forward end 57 of the member 56 can include a skid plate 73. The forward end is pivotally connected to a transverse mounting pin attached to the frame behind the skid element 48. Suitable lugs are attached to the frame member 41 at the forward end to receive the pin. As an alternative, the skid plate 73 can form a part of the header and is mounted to the frame permanently by a pin for pivotal movement about the pin. In this arrangement the forward end of the member 56 is attached by a coupling to the skid plate.

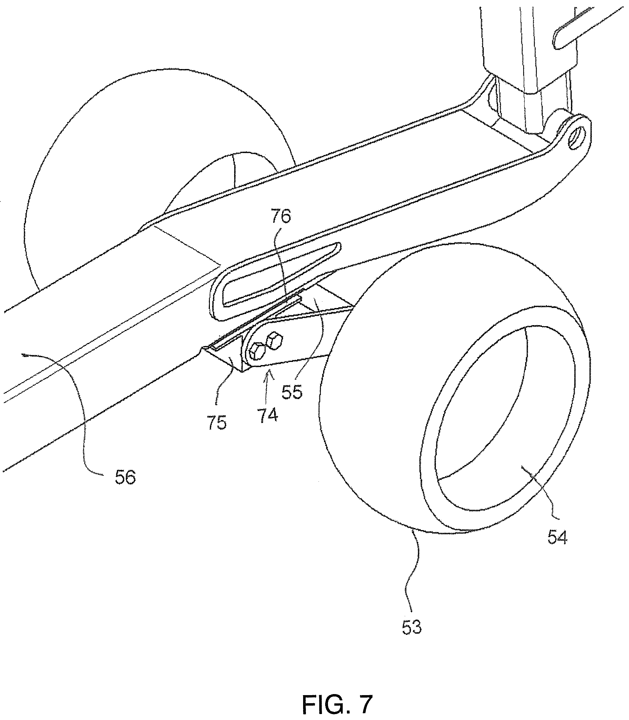

As shown in Figure 4 and 7, the axle 55 of the wheels 54 is mounted on a suspension linkage 74 which allows the axle to move up and down on the linkage about a pivot pin 75 at the forward end with a resilient block or spring 76 resisting the upward movement of the wheels toward the member 56. This provides a resilient suspension arrangement between the elongate support member and the wheels allowing up and down floating movement of the wheels.

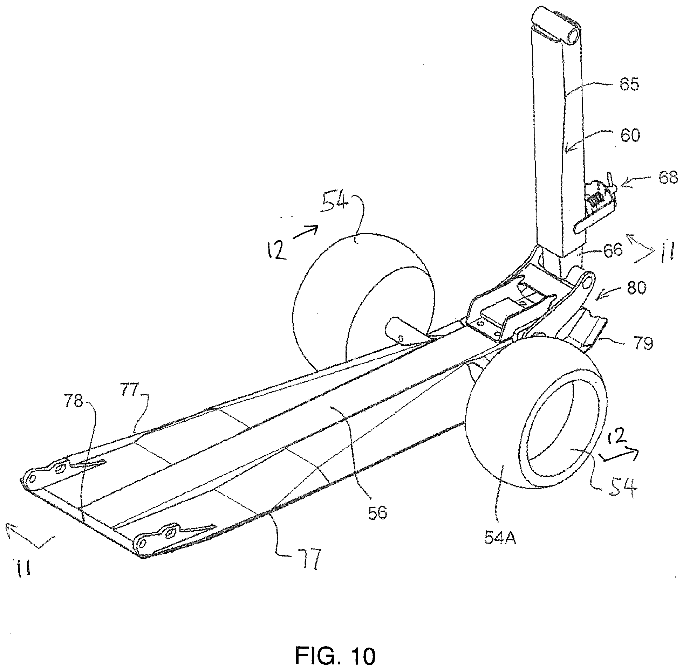

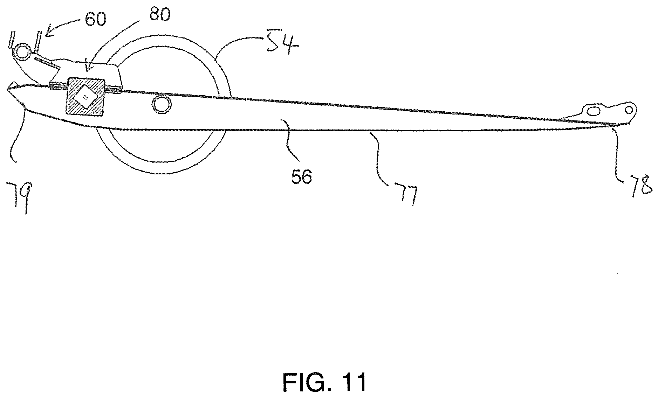

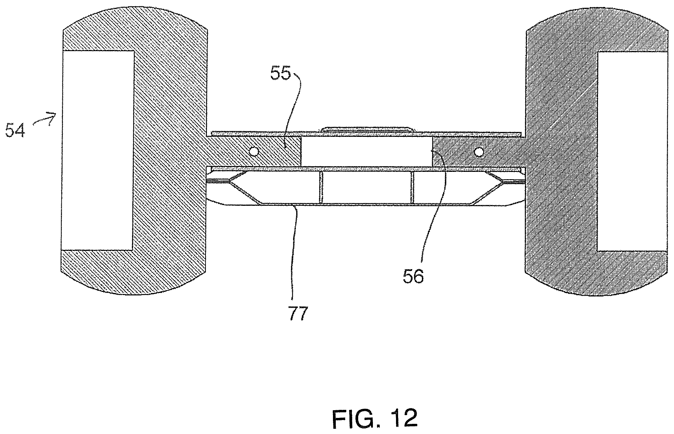

In Figures 10, 11 and 12 is shown an alternative arrangement where the surface arrangement for engaging the ground comprises a skid surface 77 which extends from a forward edge 78 effectively as a continuous slide surface rearwardly to a rear end 79 at the extendible member 60 just behind the rear edge of the table. The surface 77 thus forms a continuous surface which slides over the ground from a front edge at a position adjacent the cutter bar to a position at least adjacent to the rear edge of the table. As shown in the cross-sections of Figures 1 1 and 12, the skid surface 77 is arched both longitudinally and transversely.

The skid surface is carried on the member 56 as a permanent attachment thereto and can be used alone to run over the ground. Alternatively the skid member can be used in conjunction with a pair of ground wheels 54A mounted on the member 56 by a suspension arrangement similar to that previously described. Thus when the wheels are used they can float upwardly relative to the skid surface so that primarily the wheels run on the ground and provide the support. The wheels can be removed in some conditions such as heavy mud where they may be ineffective or may collect mud. That is the wheel arrangement is removable to allow the skid surface to slide on the ground.

As can be seen in Figures 4 and 10, the wheel assemblies pivot near the cutter bar and have a short skid 57 that is part of the structure that the header would only ride on when cutting directly on the ground. The device of Figure 4 comprises a short skid shoe 57 on the leading edge near the cutting edge of the header with a member 56 extending rearward allowing the attachment of ground following wheels 54 and an adjustment device 60 at the rear of the header.

The location of the four wheel assemblies where are at each end of the header, and two are near the hinge points as displayed in Figure 1 ensures enough moment about the virtual balance point of the header to overcome friction and cause the header to flex. This allows the operator to use the header while in flex mode in order to achieve better ground following while cutting as high as 18" off the ground.

The wheel assembly contains an isolator 74 to aid in eliminating header bounce and stress on components as the wheels travel over bumps and other incompressible objects. One embodiment of the isolator consists of a torsional rubber isolator which is mounted to the member 76 that spans from the cutter bar to the rear adjuster. In this case, the wheel assembly 54 and axle 55 which contains two links is bolted to the torsional isolator 76. As the wheel 54 strikes an object, the links convert the force into a moment which causes the isolator 74 to rotate and absorb the load.

The means of adjusting the height of the wheel assembly can be a manual adjuster such as is explained later or a hydraulic wheel height adjustment system. With the manual adjuster, the operator would set all four adjusters to a height which is close to the desired cut height and fine adjustments can then be made to the cut height by changing the tilt of the header using the cylinder 26. With the hydraulic adjustment which contains four hydraulic cylinders in a series circuit in a master slave arrangement, and a switch 72 in the combine cab, the operator can adjust the height of the wheels by actuating the cylinders using the in cab switch while harvesting.

The long skid shoe embodiment of Figures 10, 11 and 12 consists of a member positioned such that the header rides on the shoes when in cutting position. The operator may choose to retract the shoes such that the header can cut on the ground, effectively removing the long skid shoes from operation. This enables the operator to adjust cut height such that a desired stubble length can be achieved. The embodiment shown allows for a stubble height ranging from 3.2 cm (1.25") up to 35.6 cm (14").

The long shoe 77 may either be integrated into standard short skid shoes 57 near the front of the header, or exist in addition to short standard skid shoes 57.

The wheels 54A can be permanently attached to the skid shoe or removable as desired.

The wheels 54, 54A may consist of a variety of materials, including a solid material as shown in this embodiment, or a pneumatic wheel.

The wheels 54 may be fixed position along the member 56 or include an adjustable member (not shown) such that the distance of the wheel from the cutter bar may be altered.

The wheels 54A may be used to increase the stubble height beyond the range of the shoe. In this embodiment, 45.7 cm (18 inches) may be achieved using the wheels. The wheels 54A offer all of the benefits of the skid shoe, while increasing the life of the device in abrasive conditions, as well as reducing friction.

The preferred method of providing shock absorption is to install a resilient isolator 80 at the connection of the vertical post 60 and rear of the beam 56 carrying the skid shoe member 77. The isolator provides a hinge with a resilient rubber restrictor at the hinge which provides flexibility between the rear of the skid and the post 60 so that the skid can ride up and down to accommodate changes in terrain. Various arrangements for providing flexibility at this location are possible.

As shown in Figure 2, the elongate support member 56 of Figure 4 is mounted on a coupling 561 adjacent one end of the cutter bar 17 at the end sheet 562 of the header. This ensures that the coupling is properly supported by a stiff portion of the cutter bar as connected at the end sheet 562 without applying an excessive load at the cutter bar which might cause bending. The elongate bar 56 is mounted so that it is inclined to vertical plane 563 at right angles to the cutter bar 17 at the coupling 561 . In this way, the ground engaging wheel 564 is supported at a position spaced from the end sheet 562 of the header by a distance greater than a distance of said coupling 561 from the end of the header. Further, in this embodiment the elongate beam 56 carries a single wheel carried on a side of the beam 56 remote from the of the header. This ensures that the wheel 564 is as far as possible from the end of the header while allowing the coupling to be mounted very close to the end. This arrangement brings the wheel 564 inboard of the end of the header so that the wheel, as much as possible, does not track beyond the end if the cutter bar during sharp turns of the header. In this way the wheel is less likely to trample on uncut crop during turns.

## Claims

1. A crop harvesting header (10) comprising:
a main frame structure (13) extending across a width of the header;
a mounting assembly (11) for carrying the main frame structure on a propulsion vehicle by which the header is transported in movement in a forward direction generally at right angles to the width across ground including a crop to be harvested;
a crop receiving table (16) carried on the main frame structure across the width of the header;
a cutter bar (45) across a front of the table arranged to move over the ground in a cutting action and carrying a sickle knife (47) operable for cutting the crop as the header is moved forwardly across the ground for depositing the crop onto the table;
a skid element (48) on the main frame structure for engaging the ground so as to receive lifting forces from the ground;
the skid element located adjacent and behind the cutter bar and extending along the length of the cutter bar so that the cutter bar is supported adjacent the ground for cutting crop close to the ground as the skid element slides over the ground;
a crop transport system (18) on the table for moving the cut crop toward a discharge location of the header;
the harvesting header having a first position in which the skid element engages the ground and the cutter bar is adjacent the ground and a second position in which the skid element and the cutter bar is raised away from the ground;
the main frame structure including a center frame portion (10A), a first wing frame portion (10B) and a second wing frame portion (10C);
the first wing frame portion being connected to the center frame portion by a first pivot coupling (27A) which provides pivotal movement of the first wing frame portion relative to the center frame portion about a first pivot axis extending in a plane parallel to the forward direction;
the first pivot coupling acting to support weight from the first wing frame portion while outboard weight from the first wing frame portion outboard of the first pivot coupling rotates the first wing frame portion about the first pivot coupling in a downward direction;
the second wing frame portion being connected to the center frame portion by a second pivot coupling (27A) which provides pivotal movement of the second wing frame portion
relative to the center frame portion about a second pivot axis extending in a plane parallel to the forward direction;
the second pivot coupling acting to support weight from the second wing frame portion while outboard weight from the second wing frame portion outboard of the second pivot coupling rotates the second wing frame portion about the second pivot coupling in a downward direction;
the mounting assembly including a float suspension system (24) connected to the center frame portion providing a variable lifting force from the propulsion vehicle acting to support the main frame structure for floating movement relative to the propulsion vehicle;
a first interconnecting float linkage (30) connected between the center frame portion and the first wing frame portion which communicates a first variable lifting force from the center frame portion to the first wing frame portion against the outboard weight of the first wing frame portion;
a second interconnecting linkage (30) connected between the center frame portion and the second wing frame portion which communicates a second variable lifting force from the center frame portion to the second wing frame portion against the outboard weight of the second wing frame portion;
in the first position of the header with the skid element engaging the ground, the float suspension system and first and second interconnecting linkages provide a downforce from the skid element on the ground which is balanced between the center frame portion and the first and second wing frame portions;
and **characterized by** a gauging system (50) used in the second position of the header comprising:
a first ground engaging member (51A) supported on the first wing frame portion at a location spaced outwardly from the center frame portion for engaging the ground so as to receive lifting forces from the ground;
a second ground engaging member (51B) supported on the second wing frame portion at a location spaced outwardly from the center frame portion for engaging the ground so as to receive lifting forces from the ground; and
additional ground engaging members (51C) supported on the main frame structure proximate the center frame portion for engaging the ground so as to receive lifting forces from the ground;
each of the ground engaging members having a surface arrangement (53) engaging the ground at a position rearwardly of the cutter bar and forwardly of a rear of the table in the second position of the header with the first, second and additional ground engaging members collectively supporting the skid element spaced above the ground while the first and second wing frame portions pivot relative to the center frame portion in response to changes in ground height; wherein each of the surface arrangements is mounted on an elongate support member (56) connected at a forward end (57) rearwardly of the cutter bar and forward of the rear of the table for pivotal movement about an axis parallel to the cutter bar;
the elongate support member being arranged to be raised and lowered to raise and lower the surface arrangement (53);
wherein, in the first position of the header, each of the surface arrangements is fully retracted by raising of the elongate support member to a height underneath the table in which the skid element engages the ground.

2. The crop harvesting header (10) according to claim 1 wherein said first and second ground engaging members (51A, 51B) are mounted at respective outer ends of the first and second wing frame portions (10B, 10C) and said additional ground engaging members comprise a first additional ground engaging member (51C) mounted on the first wing frame portion closely adjacent to the pivot axis and a second additional ground engaging member (51C) mounted on the second wing frame portion closely adjacent the pivot axis, and wherein the center frame portion (10A) is supported only by said float suspension system (24) and not by any one of said additional ground engaging members.

3. The crop harvesting header (10) according to claim 1 or 2 wherein each of the elongate support members (56) extends rearwardly under the table (43) to a rear end (59) rearward of the table and there is provided an upstanding extendible member (60) connected at a lower end (61) to the elongate support member (56) and to the frame structure above the lower end and rearward of the table to raise and lower the cutter bar relative to the ground.

4. The crop harvesting header (10) according to claim 3 wherein the extendible member (60) comprises a pair of telescopic members with an outer member (65) and with an inner member (66) slidable within the outer member, wherein the inner member has a plurality of longitudinally spaced holes (67) for receiving a pin (68) of the outer member to locate the inner and outer members at an extension position defined by the selected hole, wherein the holes are spaced transversely of the inner member and the pin is carried on a rotatable member (69) which acts when rotated to move the pin transversely across the outer member so that the transverse position of the pin when rotated acts automatically to select one of the holes of the inner member.

5. The crop harvesting header (10) according to any preceding claim wherein the main frame structure includes a frame beam (40) and a plurality of frame members (41) located at spaced positions across the main frame structure; each frame member extending from the frame beam in a first portion (42) downwardly behind the table and in a second portion (44) forwardly under the table to support the cutter bar;
the second portion forming a channel member with a downwardly facing open face (46);
the elongate support members (56) each being located in a second portion of a respective one of said frame members (41) and extending rearwardly under the table (51).

6. The crop harvesting header (10) according to any preceding claim wherein each of the ground engaging surface arrangements (51) is located under the table (43).

## Patentansprüche

1. Ein Erntevorsatz (10) für landwirtschaftliche Erntearbeiten, umfassend:
eine Hauptrahmenstruktur (13), die sich über die Breite des Erntevorsatzes erstreckt;
eine Befestigungsvorrichtung (11) zum Tragen der Hauptrahmenstruktur auf einem Antriebsfahrzeug, mit dem der Vorsatz in Vorwärtsrichtung im Allgemeinen im rechten Winkel zur Breite über dem Boden, einschließlich einer zu erntenden Ernte, transportiert wird;
einen Erntegutaufnahmetisch (16), der auf der Hauptrahmenstruktur über die Breite des Erntevorsatzes getragen wird;
ein Mähbalken (45) über einer Vorderseite des Tisches, der so angeordnet ist, dass er sich in einer Schneidbewegung über den Boden bewegt, und der ein Sichelmesser (47) trägt, das zum Schneiden des Ernteguts betätigt werden kann, wenn der Vorsatz nach vorne über den Boden bewegt wird, um das Erntegut auf den Tisch zu legen;
ein Gleitelement (48) an der Hauptrahmenkonstruktion zum Eingriff mit dem Boden, um Hebekräfte vom Boden aufzunehmen;
wobei das Gleitelement neben und hinter dem Mähbalken angeordnet ist und sich entlang der Länge des Mähbalkens erstreckt, so dass der Mähbalken neben dem Boden abgestützt ist, um das Erntegut nahe am Boden zu schneiden, während das Gleitelement über den Boden gleitet;
ein Erntegut-Transportsystem (18) auf dem Tisch zum Bewegen des geschnittenen Ernteguts zu einer Ausgabestelle des Schneidwerks;
wobei der Erntevorsatz eine erste Position, in der das Gleitelement den Boden berührt und sich das Mähbalken neben dem Boden befindet, und eine zweite Position, in der das Gleitelement und das Mähbalken vom Boden angehoben sind, aufweist;
wobei die Hauptrahmenstruktur einen mittleren Rahmenabschnitt (10A), einen ersten Flügelrahmenabschnitt (10B) und einen zweiten Flügelrahmenabschnitt (10C) umfasst;
wobei der erste Flügelrahmenabschnitt mit dem mittleren Rahmenabschnitt durch eine erste Schwenkkupplung (27A) verbunden ist, die eine Schwenkbewegung des ersten Flügelrahmenabschnitts relativ zum mittleren Rahmenabschnitt um eine erste Schwenkachse ermöglicht, die sich in einer zur Vorwärtsrichtung parallelen Ebene erstreckt;
wobei die erste Schwenkkupplung dazu dient, das Gewicht des ersten Flügelrahmenabschnitts zu tragen, während das Außengewicht des ersten Flügelrahmenabschnitts außerhalb der ersten Schwenkkupplung den ersten Flügelrahmenabschnitt um die erste Schwenkkupplung in Abwärtsrichtung dreht;
wobei der zweite Flügelrahmenabschnitt mit dem mittleren Rahmenabschnitt durch eine zweite Schwenkkupplung (27A) verbunden ist, die eine Schwenkbewegung des zweiten Flügelrahmenabschnitts relativ zum mittleren Rahmenabschnitt um eine zweite Schwenkachse ermöglicht, die sich in einer zur Vorwärtsrichtung parallelen Ebene erstreckt;
wobei die zweite Schwenkkupplung dazu dient, das Gewicht des zweiten Flügelrahmenabschnitts zu tragen, während das Außengewicht des zweiten Flügelrahmenabschnitts außerhalb der zweiten Schwenkkupplung den zweiten Flügelrahmenabschnitt um die zweite Schwenkkupplung in Abwärtsrichtung dreht;
wobei die Befestigungsbaugruppe ein Schwimmaufhängungssystem (24) umfasst, das mit dem mittleren Rahmenteil verbunden ist und eine variable Auftriebskraft vom Antriebsfahrzeug bereitstellt, die die Hauptrahmenstruktur für eine Schwimmbewegung relativ zum Antriebsfahrzeug stützt;
eine erste Verbindungs-Schwimmverbindung (30), die zwischen dem mittleren Rahmenteil und dem ersten Flügelrahmenteil verbunden ist und eine erste variable Hubkraft vom mittleren Rahmenteil zum ersten Flügelrahmenteil gegen das Außengewicht des ersten Flügelrahmenteils überträgt;
ein zweites Verbindungsgestänge (30), das zwischen dem mittleren Rahmenteil und dem zweiten Flügelrahmenteil verbunden ist und eine zweite variable Hubkraft vom mittleren Rahmenteil zum zweiten Flügelrahmenteil gegen das Außenbordgewicht des zweiten Flügelrahmenteils überträgt;
in der ersten Position des Kopfstücks, in der das Kufenelement mit dem Boden in Eingriff steht, sorgen das Schwimmaufhängungssystem und die erste und zweite Verbindungsvorrichtung für einen Abtrieb vom Kufenelement auf den Boden, der zwischen dem mittleren Rahmenteil und dem ersten und zweiten Flügelrahmenteil ausgeglichen ist;
und **gekennzeichnet durch** ein Messsystem (50), das in der zweiten Position des Vorsatzgeräts verwendet wird und umfasst:
ein erstes Bodeneingriffselement (51A), das an dem ersten Flügelrahmenabschnitt an einer Stelle gelagert ist, die von dem mittleren Rahmenabschnitt nach außen beabstandet ist, um mit dem Boden in Eingriff zu kommen, um Hebekräfte vom Boden aufzunehmen;
ein zweites Bodeneingriffselement (51B), das am zweiten Flügelrahmenabschnitt an einer Stelle gelagert ist, die vom mittleren Rahmenabschnitt nach außen beabstandet ist, um mit dem Boden in Eingriff zu kommen, um Auftriebskräfte vom Boden aufzunehmen; und
zusätzliche Bodenangriffselemente (51C), die an der Hauptrahmenstruktur in der Nähe des mittleren Rahmenabschnitts gelagert sind, um in den Boden einzugreifen und so Hebekräfte vom Boden aufzunehmen;
wobei jedes der Bodenangriffselemente eine Oberflächenanordnung (53) aufweist, die
den Boden an einer Position hinter der Schneidleiste und vor einem hinteren Ende des Tisches in der zweiten Position des Vorsatzgeräts in Eingriff bringt, wobei das erste, das zweite und die zusätzlichen Bodenangriffselemente gemeinsam das Gleitelement in einem Abstand über dem Boden tragen, während der erste und der zweite Flügelrahmenabschnitt relativ zum mittleren Rahmenabschnitt in Reaktion auf Änderungen der Bodenhöhe schwenkbar sind;
wobei jede der Oberflächenanordnungen an einem länglichen Stützelement (56) angebracht ist, das an einem vorderen Ende (57) hinter dem Mähbalken und vor dem hinteren Ende des Tisches für eine Schwenkbewegung um eine zum Mähbalken parallele Achse verbunden ist;
wobei das längliche Stützelement so angeordnet ist, dass es angehoben und abgesenkt werden kann, um die Oberflächenanordnung (53) anzuheben und abzusenken;
wobei in der ersten Position des Vorsatzgeräts jede der Oberflächenanordnungen vollständig zurückgezogen ist, indem das längliche Stützelement auf eine Höhe unterhalb des Tisches angehoben wird, in der das Gleitelement mit dem Boden in Eingriff kommt.

2. Erntevorsatz (10) nach Anspruch 1, wobei das erste und das zweite Bodeneingriffselement (51A, 51B) an den jeweiligen äußeren Enden des ersten und des zweiten Flügelrahmenteils (10B, 10C) angebracht sind und die zusätzlichen bodeneingreifenden Elemente ein erstes zusätzliches bodeneingreifendes Element (51C), das am ersten Flügelrahmenabschnitt in unmittelbarer Nähe der Schwenkachse angebracht ist, und ein zweites zusätzliches bodeneingreifendes Element (51C) umfassen, das am zweiten Flügelrahmenabschnitt in unmittelbarer Nähe der Schwenkachse angebracht ist, und wobei der mittlere Rahmenabschnitt (10A) nur durch das Schwimmaufhängungssystem (24) und nicht durch eines der zusätzlichen bodeneingreifenden Elemente gestützt wird.

3. Erntevorsatz (10) gemäß Anspruch 1 oder 2, wobei sich jedes der länglichen Stützelemente (56) unter dem Tisch (43) nach hinten bis zu einem hinteren Ende (59) hinter dem Tisch erstreckt und ein aufrechtes, ausfahrbares Element (60) vorgesehen ist, das an einem unteren Ende (61) mit dem länglichen Stützelement (56) und mit der Rahmenstruktur oberhalb des unteren Endes und hinter dem Tisch verbunden ist, um die Schneidleiste relativ zum Boden anzuheben und abzusenken.

4. Erntevorsatz (10) nach Anspruch 3, wobei das ausfahrbare Element (60) ein Paar Teleskopelemente mit einem Außenelement (65) und einem Innenelement (66) umfasst, das innerhalb des Außenelements verschiebbar ist, wobei das Innenelement eine Vielzahl von in Längsrichtung beabstandeten Löchern (67) zur Aufnahme eines Stifts (68) des Außenelements aufzunehmen, um das Innen- und das Außenelement in einer durch das ausgewählte Loch definierten Ausfahrposition zu positionieren, wobei die Löcher quer zum Innenelement beabstandet sind und der Stift auf einem drehbaren Element (69) getragen wird, das bei Drehung wirkt, um den Stift quer über das Außenelement zu bewegen, so dass die Querposition des Stifts bei Drehung automatisch wirkt, um eines der Löcher des Innenelements auszuwählen.

5. Erntevorsatz (10) gemäß einem der vorstehenden Ansprüche, wobei die Hauptrahmenstruktur einen Rahmenbalken (40) und eine Vielzahl von Rahmenelementen (41) umfasst, die an beabstandeten Positionen über die Hauptrahmenstruktur verteilt angeordnet sind; wobei sich jedes Rahmenelement vom Rahmenbalken in einem ersten Abschnitt (42) nach unten hinter dem Tisch und in einem zweiten Abschnitt (44) nach vorne unter dem Tisch erstreckt, um die Schneidleiste zu tragen;
wobei der zweite Abschnitt ein Kanalelement mit einer nach unten gerichteten offenen Fläche (46) bildet;
die länglichen Stützelemente (56) jeweils in einem zweiten Abschnitt eines entsprechenden Rahmenteils (41) angeordnet sind und sich unter dem Tisch (51) nach hinten erstrecken.

6. Erntevorsatz (10) gemäß einem der vorstehenden Ansprüche, wobei jede der Bodenberührungsflächenanordnungen (51) unter dem Tisch (43) angeordnet ist.

## Revendications

1. Tête de récolte (10) comprenant :
une structure de châssis principal (13) s'étendant sur toute la largeur de la tête de récolte ;
un ensemble de montage (11) destiné à supporter la structure de châssis principale sur un véhicule de propulsion par lequel la tête de récolte est transportée en mouvement dans une direction vers l'avant généralement perpendiculaire à la largeur du sol, y compris une culture à récolter ;
une table de réception des récoltes (16) supportée par la structure de châssis principale sur toute la largeur de la barre de coupe ;
une barre de coupe (45) s'étendant sur l'avant de la table, agencée pour se déplacer sur le sol dans une action de coupe et supportant un couteau à fauche (47) pouvant être actionné pour couper la récolte lorsque la barre de coupe est déplacée vers l'avant sur le sol afin de déposer la récolte sur la table ;
un élément de patin (48) sur la structure du châssis principal pour s'engager avec le sol afin de recevoir les forces de levage provenant du sol ;
l'élément de patin étant situé à proximité et derrière la barre de coupe et s'étendant sur toute la longueur de la barre de coupe, de sorte que la barre de coupe est soutenue à proximité du sol pour couper la récolte près du sol lorsque l'élément de patin glisse sur le sol ;
un système de transport de récolte (18) sur la table pour déplacer la récolte coupée vers un emplacement de déchargement de la barre de coupe ;
la barre de coupe ayant une première position dans laquelle l'élément de glissement est en prise avec le sol et la barre de coupe est adjacente au sol, et une deuxième position dans laquelle l'élément de glissement et la barre de coupe sont relevés et éloignés du sol ;
la structure du châssis principal comprenant une partie centrale (10A), une première partie latérale (10B) et une deuxième partie latérale (10C) ;
la première partie de châssis d'aile étant reliée à la partie de châssis centrale par un premier accouplement pivotant (27A) qui assure le mouvement pivotant de la première partie de châssis d'aile par rapport à la partie de châssis centrale autour d'un premier axe de pivotement s'étendant dans un plan parallèle à la direction avant ;
le premier accouplement pivotant servant à supporter le poids de la première partie de châssis latérale tandis que le poids extérieur de la première partie de châssis latérale à l'extérieur du premier accouplement pivotant fait pivoter la première partie de châssis latérale autour du premier accouplement pivotant dans une direction vers le bas ;
la deuxième partie de cadre d'aile étant reliée à la partie de cadre centrale par un deuxième accouplement pivotant (27A) qui assure le mouvement pivotant de la deuxième partie de cadre d'aile par rapport à la partie de cadre centrale autour d'un deuxième axe de pivotement s'étendant dans un plan parallèle à la direction vers l'avant ;
le deuxième accouplement pivotant servant à supporter le poids de la deuxième partie du châssis latéral tandis que le poids extérieur de la deuxième partie du châssis latéral à l'extérieur du deuxième accouplement pivotant fait pivoter la deuxième partie du châssis latéral autour du deuxième accouplement pivotant vers le bas ;
l'ensemble de montage comprenant un système de suspension à flotteur (24) relié à la partie centrale du châssis fournissant une force de levage variable provenant du véhicule de propulsion agissant pour supporter la structure principale du châssis pour un mouvement de flottement par rapport au véhicule de propulsion ;
une première tringlerie de flottaison d'interconnexion (30) reliée entre la partie centrale du châssis et la première partie du châssis d'aile qui communique une première force de levage variable de la partie centrale du châssis à la première partie du châssis d'aile contre le poids extérieur de la première partie du châssis d'aile ;
une deuxième liaison d'interconnexion (30) reliée entre la partie centrale du châssis et la deuxième partie latérale du châssis, qui transmet une deuxième force de levage variable de la partie centrale du châssis à la deuxième partie latérale du châssis contre le poids extérieur de la deuxième partie latérale du châssis ;
dans la première position de la tête avec l'élément de patin en prise avec le sol, le système de suspension flottante et les première et deuxième tringleries d'interconnexion fournissent une force d'appui vers le bas à partir de l'élément de patin sur le sol, qui est équilibrée entre la partie centrale du châssis et les première et deuxième parties latérales du châssis ;
et **caractérisé par** un système de jaugeage (50) utilisé dans la deuxième position de la barre de coupe, comprenant :
un premier élément d'engagement au sol (51A) supporté sur la première partie de châssis d'aile à un emplacement espacé vers l'extérieur de la partie centrale du châssis pour s'engager avec le sol de manière à recevoir des forces de levage provenant du sol ;
un deuxième élément d'engagement au sol (51B) supporté sur la deuxième partie de châssis d'aile à un emplacement espacé vers l'extérieur de la partie centrale du châssis pour s'engager avec le sol de manière à recevoir des forces de levage provenant du sol ; et
des éléments supplémentaires (51C) en contact avec le sol, supportés sur la structure principale du châssis à proximité de la partie centrale du châssis, pour entrer en contact avec le sol afin de recevoir les forces de levage provenant du sol ;
chacun des éléments d'engagement au sol ayant une disposition de surface (53) s'engageant
le sol à une position située à l'arrière de la barre de coupe et à l'avant de l'arrière de la table dans la deuxième position de la tête de récolte, les premier, deuxième et supplémentaires éléments d'engagement au sol supportant collectivement l'élément de patin espacé au-dessus du sol tandis que les première et deuxième parties de châssis en aile pivotent par rapport à la partie centrale du châssis en réponse aux changements de hauteur du sol ;
dans lequel chacun des agencements de surface est monté sur un élément de support allongé (56) relié à une extrémité avant (57) en arrière de la barre de coupe et en avant de l'arrière de la table pour un mouvement pivotant autour d'un axe parallèle à la barre de coupe ;
l'élément de support allongé étant agencé pour être relevé et abaissé afin de relever et d'abaisser l'agencement de surface (53) ;
dans lequel, dans la première position de la tête de récolte, chacun des agencements de surface est complètement rétracté par le soulèvement de l'élément de support allongé à une hauteur sous la table dans laquelle l'élément de patin s'engage avec le sol.

2. Tête de récolte (10) selon la revendication 1, dans laquelle lesdits premier et deuxième éléments d'engagement au sol (51A, 51B) sont montés aux extrémités extérieures respectives des première et deuxième parties de châssis en aile (10B, 10C) et lesdits éléments supplémentaires d'engagement au sol comprennent un premier élément supplémentaire d'engagement au sol (51C) monté sur la première partie de cadre d'aile à proximité immédiate de l'axe de pivotement et un deuxième élément supplémentaire d'engagement au sol (51C) monté sur la deuxième partie de cadre d'aile à proximité immédiate de l'axe de pivotement, et dans laquelle la partie centrale du cadre (10A) est supportée uniquement par ledit système de suspension flottante (24) et non par l'un quelconque desdits éléments supplémentaires d'engagement au sol.

3. Tête de récolte (10) selon la revendication 1 ou 2, dans laquelle chacun des éléments de support allongés (56) s'étend vers l'arrière sous la table (43) jusqu'à une extrémité arrière (59) située à l'arrière de la table, et un élément extensible vertical (60) est prévu, relié à une extrémité inférieure (61) à l'élément de support allongé (56) et à la structure de châssis au-dessus de l'extrémité inférieure et à l'arrière de la table, afin de relever et d'abaisser la barre de coupe par rapport au sol.

4. Tête de récolte (10) selon la revendication 3, dans laquelle l'élément extensible (60) comprend une paire d'éléments télescopiques avec un élément extérieur (65) et un élément intérieur (66) pouvant coulisser à l'intérieur de l'élément extérieur, dans laquelle l'élément intérieur comporte une pluralité de trous espacés longitudinalement (67) pour recevoir une goupille (68) de l'élément extérieur afin de positionner les éléments intérieur et extérieur dans une position d'extension définie par le trou sélectionné, les trous étant espacés transversalement par rapport à l'élément intérieur et la goupille étant portée par un élément rotatif (69) qui, lorsqu'il tourne, déplace la goupille transversalement à travers l'élément extérieur de telle sorte que la position transversale de la goupille lorsqu'elle tourne sélectionne automatiquement l'un des trous de l'élément intérieur.

5. Tête de récolte (10) selon l'une quelconque des revendications précédentes, dans laquelle la structure de châssis principale comprend une poutre de châssis (40) et une pluralité d'éléments de châssis (41) situés à des positions espacées à travers la structure de châssis principale ; chaque élément de châssis s'étendant à partir de la poutre de châssis dans une première partie (42) vers le bas derrière la table et dans une deuxième partie (44) vers l'avant sous la table pour supporter la barre de coupe ;
la deuxième partie formant un élément de canal avec une face ouverte tournée vers le bas (46) ;
les éléments de support allongés (56) étant chacun situés dans une deuxième partie d'un élément respectif parmi lesdits éléments de châssis (41) et s'étendant vers l'arrière sous la table (51).

6. Tête de récolte (10) selon l'une quelconque des revendications précédentes, dans laquelle chacun des agencements de surface en contact avec le sol (51) est situé sous la table (43).
